(19) Europäisches Patentamt / European Patent Office / Office européen des brevets

(11) **EP 1 903 573 A1**

(12) **EUROPEAN PATENT APPLICATION**
published in accordance with Art. 153(4) EPC

(43) Date of publication:
**26.03.2008 Bulletin 2008/13**

(51) Int Cl.:
***G11B 27/034*** (2006.01)   ***G11B 20/10*** (2006.01)
***H04N 5/765*** (2006.01)

(21) Application number: **06768090.0**

(22) Date of filing: **11.07.2006**

(86) International application number:
**PCT/JP2006/313777**

(87) International publication number:
**WO 2007/007759 (18.01.2007 Gazette 2007/03)**

(84) Designated Contracting States:
**GB**

(30) Priority: **11.07.2005 JP 2005201625**

(71) Applicant: **Pioneer Corporation**
**Tokyo 153-8654 (JP)**

(72) Inventor: **ISHII, Hidehiro,**
**c/o PIONEER CORPORATION**
**Tokorozawa-shi,**
**Saitama 359-8522 (JP)**

(74) Representative: **Viering, Jentschura & Partner**
**Grillparzerstrasse 14**
**81675 München (DE)**

(54) **INFORMATION RECORDING DEVICE AND INFORMATION RECORDING METHOD**

(57)    When a size (AO) of contents data (20) is larger than an unrecorded capacity (BO) of a second recording medium (3), the contents data (20) is divided into an unchanged data section (21) and a changed data section (22), and a process of reducing video resolution or a recoding bit rate is performed only to the changed data section (22). Thus, the unchanged data section (21) can be dubbed at a high speed, and a time required for dubbing can be shortened.

[FIG. 3]

**Description**

Technical Field

The present invention relates to an information recording apparatus for and an information recording method of recording content data, such as a video work and a musical work, onto an optical disc.

Background Art

Various recording media are popular as recording media on which the content data, such as a video work and a musical work, can be recorded. Such recording media can be classified, if focusing on the recording capacity, mainly into: large-capacity recording media with a recording capacity of several tens gigabytes to several hundred gigabytes>; and middle/small-capacity recording media with a recording capacity of several hundred megabytes to several gigabytes. The large-capacity recording media are represented by a hard disk. The middle/small-capacity recording media are represented by an optical disc, such as a Blu-ray, a HD-DVD, a DVD, and a CD (Compact Disc).

By the way, an information recording apparatus provided with a hard disk drive apparatus an and optical disc drive apparatus has been popular, recently. Such an information recording apparatus is presented by a hard disk drive built-in DVD recorder.

A user uses the hard disk drive built-in DVD recorder to record a video work, such as a television program, onto a hard disk or a DVD. In general, the user firstly records the television program onto the hard disk. Then, when the user wants to reproduce the television program recorded on the hard disk, on another reproducing apparatus, when the user wants to take the record data of the television program outside or when the user wants to store the record data of the television program for a long time, the user dubs or copies the record data of the television program recorded on the hard disk.

Most of the hard disk drive built-in DVD recorders employ two types of dubbing methods. That is, high-speed dubbing and constant-speed dubbing.

The high-speed dubbing is a method of copying video data encoded (or compressed) by MPEG-2 (Moving Picture Experts Group phase 2) or audio data encoded by AC-3 (Audio Code number 3), in the encoded state from the hard disk to the DVD. According to the high-speed dubbing, the video data or the audio data is read from the hard disk and is recorded onto the DVD as it is, so that the dubbing or copy can be performed at high-speed in a short time. According to the high-speed dubbing, however, the video data or the audio data is copied in the encoded state from the hard disk to the DVD at an already determined recording bit rate, so that it is hardly possible to change the recording bit rate of the vide data or the audio data in the dubbing procedure. As a result, it is hardly possible to change the size of the video data or the audio data in the dubbing.

On the other hand, the constant-speed dubbing is a method of decoding (decompressing) video data encoded by MPEG-2 or audio data encoded by AC-3, changing the recording bit rate, encoding the data again, and recording the video data or the audio data encoded at the changed recording bit rate onto the DVD. According to the constant-speed dubbing, the video data or the audio data is decoded once for the dubbing. Thus, in some cases the dubbing requires the same time as in the reproduction of the video data or the audio data to watch them. That is, the constant-dubbing has a slower dubbing speed and needs a longer time than those of the high-speed dubbing. According to the constant-speed dubbing, however, it is possible to change the recording bit rate of the video data or the audio data in the dubbing procedure. As a result, it is possible to change the size of the video data or the audio data in the dubbing.

Disclosure of Invention

Subject to be Solved by the Invention

For example, if the size of the content data the user wants to copy from the hard disk to the DVD is greater than the capacity of an unrecorded area of the DVD, the currently spread hard disk drive built-in DVD recorder performs the constant-speed dubbing on the entire content data.

That is, if the size of the content data recorded on the hard disk is greater than the capacity of the unrecorded area of the DVD, the entire content data cannot be recorded into the unrecorded area of the DVD unless the size of the content data is reduced by changing the recording bit rate of the content data. In such a case, the hard disk drive built-in DVD recorder selects not the high-speed dubbing but the constant-speed dubbing, and performs the constant-speed dubbing on the entire content data.

Specifically, in such a case, most of the currently spread hard disk drive built-in DVD recorders display a message which indicates to select the constant-speed dubbing, on a small display or the like mounted on the recorders, to thereby propose to the user to select the constant-speed dubbing. Then, if the user agrees about the proposition and inputs an instruction to perform the constant-speed dubbing to the recorder, the constant-speed dubbing is performed on the entire content data.

As described above, however, the constant-speed dubbing has a slow dubbing speed and needs a longer time. For example, it is assumed that the content data to be copied is one movie work, with the total reproduction time of about 2 hours, recorded on the hard disk at a high recording bit rate (e.g. about 10Mbps). It is assumed that this content data is copied onto a dual-layer DVD-R (with a recording capacity of 8.54 gigabytes) with an entire recording area unrecorded. In this case, since the size of the content data is greater than the recording capacity of the dual-layer DVD-R, the hard disk drive built-in DVD recorder selects the constant-speed dubbing. According to the constant-speed dubbing, it requires the same time as in the reproduction of the content data to watch it. If so, the dubbing time will be 2 hours. It is inconvenient to take such a long time for the dubbing.

In view of the above-exemplified problems, it is therefore an object of the present invention to provide an information recording apparatus, an information recording method, and a computer program, which enable the entire content data to be copied in a short time even if the size of the content data is greater than the recording capacity of the unrecorded portion of the recording medium which is a dubbing destination.

Means for Solving the Subject

The above object of the present invention can be achieved by a first information recording apparatus having a function of reading content data recorded on a first recording medium and of recording the content data onto a second recording medium, the information recording apparatus provided with: a reading device for reading the content data, which is encoded at a first recording bit rate and which is recorded on the first recording medium, from the first recording medium; a dividing device for dividing the content data into an unchanged data portion and a changed data portion; a recording bit rate changing device for changing a recording bit rate of the changed data portion from the first recording bit rate to a second recording bit rate which is lower than the first recording bit rate; and a recording device for recording the unchanged data portion and the changed data portion in which the recording bit rate is changed by the recording bit rate changing device, onto the second recording medium.

The above object of the present invention can be also achieved by a second information recording apparatus having a function of reading content data, including video data, recorded on a first recording medium and of recording the content data onto a second recording medium, the information recording apparatus provided with: a reading device for reading the content data in which first video resolution is set, from the first recording medium; a dividing device for dividing the content data into an unchanged data portion and a changed data portion; a video resolution changing device for changing video resolution of the changed data portion from the first video resolution to second video resolution which is lower than the first video resolution; and a recording device for recording the unchanged data portion and the changed data portion in which the video resolution is changed by the video resolution changing device, onto the second recording medium.

The above object of the present invention can be also achieved by a first information recording method of reading content data recorded on a first recording medium and of recording the content data onto a second recording medium, the information recording method provided with: a dividing process of dividing the content data, which is encoded at a first recording bit rate, into an unchanged data portion and a changed data portion; a reading process of reading the changed data portion from the first recording medium; a recording bit rate changing process of changing a recording bit rate of the changed data portion read in the reading process, from the first recording bit rate to a second recording bit rate which is lower than the first recording bit rate; and a recording process of reading the unchanged data portion from the first recording medium, of recording the unchanged data portion onto the second recording medium, and of recording the changed data portion in which the recording bit rate is changed in the recording bit rate changing process, onto the second recording medium.

The above object of the present invention can be also achieved by a second information recording method of reading content data recorded on a first recording medium and of recording the content data onto a second recording medium, the information recording method provided with: a dividing process of dividing the content data in which first video resolution is set, into an unchanged data portion and a changed data portion; a reading process of reading the changed data portion from the first recording medium; a video resolution changing process of changing video resolution of the changed data portion read in the reading process, from the first video resolution to second video resolution which is lower than the first video resolution; and a recording process of reading the unchanged data portion from the first recording medium, of recording the unchanged data portion onto the second recording medium, and of recording the changed data portion in which the video resolution is changed in the video resolution changing process, onto the second recording medium.

The above object of the present invention can be also achieved by a computer program for making a computer function as the first or second information recording apparatus of the present invention (including its various aspects).

The above object of the present invention can be also achieved by a computer program product in a computer-readable medium for tangibly embodying a program of instructions executable by a computer, the computer program product making the computer function as the first or second information recording apparatus of the present invention (including its various aspects).

According to the computer program product of the present invention, the aforementioned first or second information recording apparatus of the present invention can be embodied relatively readily, by loading the computer program product from a recording medium for storing the computer program product, such as a ROM (Read Only Memory), a CD-ROM (Compact Disc - Read Only Memory), a DVD-ROM (DVD Read Only Memory), a hard disk or the like, into the computer, or by downloading the computer program product, which may be a carrier wave, into the computer via a communication device. More specifically, the computer program product may include computer readable codes to cause the computer (or may comprise computer readable instructions for causing the computer) to function as the aforementioned first or second information recording apparatus of the present invention.

These effects and other advantages of the present invention will become more apparent from the embodiment explained below.

Brief Description of Drawings

[FIG. 1] FIG. 1 is a block diagram generally showing an embodiment of the information recording apparatus of the present invention.

[FIG. 2] FIG. 2 is a flowchart showing a first dubbing operation of the information recording apparatus in FIG. 1.

[FIG. 3] FIG. 3 is an explanatory diagram showing content data recorded on a first recording medium and content data recorded on a second recording medium by the first dubbing operation.

[FIG. 4] FIG. 4 is an explanatory diagram showing the content data in a DVD video format recorded on the second recording medium by the first dubbing operation.

[FIG. 5] FIG. 5 is an explanatory diagram showing the content data in a VR format recorded on the second recording medium by the first dubbing operation.

[FIG. 6] FIG. 6 is an explanatory diagram showing the content data recorded on the first recording medium and the content data recorded on the second recording medium by a second dubbing operation.

[FIG. 7] FIG. 7 is an explanatory diagram showing the content data in the DVD video format recorded on the second recording medium by the second dubbing operation.

[FIG. 8] FIG. 8 is an explanatory diagram showing the content data recorded on the first recording medium and the content data recorded on the second recording medium by a third dubbing operation.

[FIG. 9] FIG. 9 is an explanatory diagram showing the content data recorded on the first recording medium and the content data recorded on the second recording medium by a fourth dubbing operation.

[FIG. 10] FIG. 10 is an explanatory diagram showing the content data in the VR format recorded on the second recording medium by the fourth dubbing operation.

[FIG. 11] FIG. 11 is a block diagram showing a hard disk drive built-in DVD recorder to which the present invention is applied.

Description of Reference Codes

1 information recording apparatus
2 first recording medium
3 second recording medium
11 reading device
12 dividing device
13 rate resolution changing device
14 recording device
150 hard disk drive built-in DVD recorder

Best Mode for Carrying Out the Invention

Hereinafter, the best mode for carrying out the invention will be explained in each embodiment in order, with reference to the drawings.

(Outline of Information Recording Apparatus)

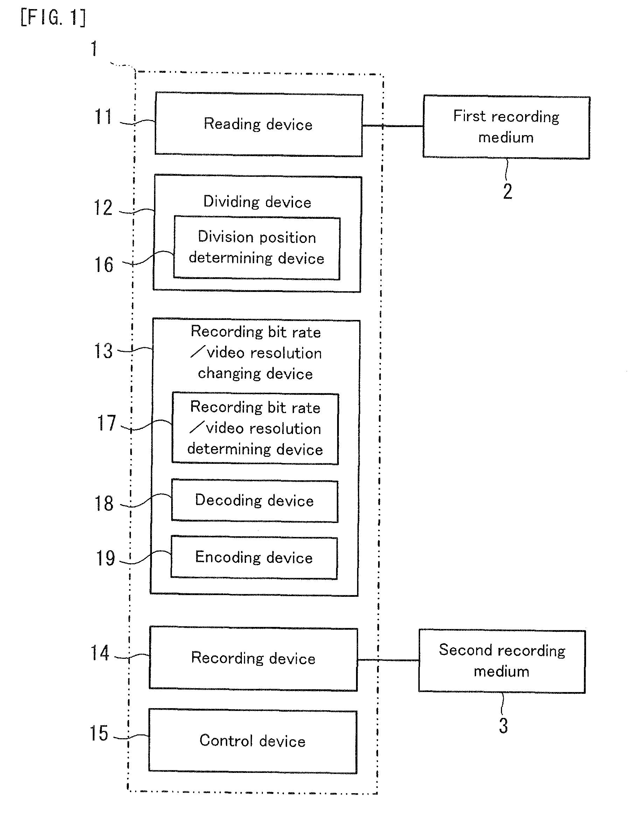

FIG. 1 shows an embodiment of the information recording apparatus of the present invention. An information recording apparatus 1 in FIG. 1 has a function of reading content data recorded on a first recording medium 2 and of recording it onto a second recording medium 3. By virtue of the function, the content data recorded on the first recording medium 2 can be copied to the second recording medium 3.

The first recording medium is desirably a large-capacity recording medium with a recording capacity of several tens gigabytes or more, mainly. The first recording medium is desirably, for example, a hard disk.

The second recording medium is desirably a middle/small-capacity recording medium with a recording capacity of several hundred megabytes to several gigabytes. The first recording medium is desirably, for example, an optical disc, such as a Blu-ray, a HD-DVD, a DVD, and a CD (Compact Disc). Incidentally, the optical disc may be a single layer type or dual layer type, or a recordable (or write-once) type or rewritable type.

The information recording apparatus 1 is desirably provided with a control apparatus, such as a hard disk drive apparatus, for controlling the reading and recording of the information / data with respect to the large-capacity recording medium. Moreover, the information recording apparatus 1 is also provided desirably with a control apparatus, such as an optical disc drive apparatus (a CD drive, a DVD drive, or the like), for controlling the reading and recording of the information / data with respect to the middle/small-capacity recording medium. The information recording apparatus 1 can be applied to e.g. a hard disk drive built-in DVD recorder.

The content data is data of a video work, a musical work, a television program, or the like. The content data mainly includes video data and audio data; however, like the content data of the musical work, the content data includes only the audio data in some cases. That is, the type of the data included in the content data varies depending on the form of the work.

The content data is recorded on the first recording medium 2. For example, a hard disk drive built-in DVD recorder, which is generally spread, has a function of recording a television program broadcasted from a television broadcast station, as the content data, onto a hard disk. By using such a function in the past, the content data is already recorded on the first recording medium 2.

Moreover, the content data recorded on the first recording medium 2 is encoded at a first recording bit rate. That is, the content data is recorded on the first recording medium 2 in the encoded state at the first recording bet rate. Moreover, the content data recorded on the first recording medium 2 includes the video data, and first video resolution is set to the video data.

Incidentally, an encoding method employed for the encoding of the content data is an encoding method at a variable bit rate. For example, it is MPEG 2 for the video data, and it is AC-3 for the audio data. Moreover, the encoding method employed for the encoding of the content data is an encoding method in which the video resolution can be variably set. For example, MPEG 2 can variably set the video resolution.

Most of the hard disk drive built-in DVD recorders which are generally spread have a function of selecting and setting image quality (image quality mode) for the reproduction of the recorded content data when recording the content data, such as a television program. According to the DVD recorder, if the user selects a high image quality mode (e.g. XP mode, fine mode, or the like), the content data transmitted from a television broadcast station is encoded at a high recording bit rate of e.g. about 10Mbps (bits per second) and is recorded onto the hard disk. Moreover, in the encoding, high video resolution is set, such as FD1 (Full D1 720×48). If the high recording bit rate or the high video resolution is set, the size (or length) per unit reproduction time for the content data increases.

On the other hand, if the user selects a low image quality mode (e.g. SP mode (or standard mode), LP mode, EP mode, or the like), the content data transmitted from a television broadcast station is encoded at a low recording bit rate of e.g. about 5 or 2.5Mbps and is recorded onto the hard disk. Moreover, if the LP mode is selected, low video resolution is set, such as HD1 8Half D1 352 × 480), for the content data in the encoding. If the low recording bit rate or the low video resolution is set, the size (or length) per unit reproduction time for the content data reduces.

The information recording apparatus 1 can copy or dub such content data from the first recording medium 1, such as a hard disk, to the second recording medium 3, such as a DVD. In the dubbing, the information recording apparatus 1 compares the size of the content data recorded on the first recording medium 2 with the capacity of an unrecorded area of the second recording medium 2. If the size of the content data is greater than the capacity of the unrecorded area of the second recording medium 2, the information recording apparatus 1 divides the content data into an unchanged data portion and a changed data portion. Then, the information recording apparatus 1 changes, in only the changed data portion, the recording bit rate from the first recording bit rate to a second recording bit rate, which is lower than the first recording bit rate. Alternatively, the information recording apparatus 1 changes, in only the changed data portion, the video resolution from the first video resolution to second video resolution, which is lower than the first video resolution. Incidentally, it simultaneously changes the recording bit rate and the video resolution in some cases. Then, the information recording apparatus 1 records the unchanged data portion and the changed data portion in which the recording bit rate or the video resolution (i.e. either one or both of the recording bit rate and the video resolution) is changed, onto the second recording medium 3. Incidentally, there are various possible execution order of executing the changing process of changing the video resolution or the recording bit rate in the changed data portion, the recording process of recording the unchanged data portion, and the recording process of recording the changed data portion. The execution order is determined in view of processing efficiency or the like.

By reducing the recording bit rate or the video resolution in the changed data portion, the size of the changed data portion is reduced. Therefore, the size of the entire content data obtained by adding the unchanged data portion and the changed data portion after the video resolution or the recording bit rate is reduced, becomes equal to or less than the capacity of the unrecorded area of the second recording medium 3. As a result, it is possible to record the entire content data onto the second recording medium 3.

In the dubbing process, the first video resolution is set for the unchanged data portion. Then, the unchanged data portion is read from the first recording medium 2 in the encoded state at the first recording bit rate, and is recorded onto the second recording medium 3 immediately as it is. Thus, for the unchanged data portion, it is possible to perform the high-speed dubbing, such as 4-time speed, 8-time speed, and 16-time speed. On the other hand, for the changed data portion, the video resolution is changed from the first video resolution to the second video resolution, and the recording bit rate is changed from the first recording bit rate to the second recording bit rate. After that, the changed data portion is recorded onto the second recording medium 3. In order to change the video resolution or the recording bit rate, normally, it is necessary to decode the content data once, reset the video resolution or the recording bit rate, and then encode the content data. Thus, the dubbing in the changed data portion is slower than the dubbing in the unchanged data portion. For example, the dubbing in the changed data portion requires the same time as in the reproduction of the content data to watch it.

In the dubbing process of the information recording apparatus 1, when the size of the content data is greater than the recording capacity of the unrecorded area of the second recording medium 3, the content data is divided into the unchanged data portion and the changed data portion, and the video resolution or the recording bit rate is changed only in the changed data portion. Therefore, the dubbing can be performed at high speed in a short time in the unchanged data portion. By this, it is possible to reduce the dubbing time. That is, it is only one portion of the content data, i.e. the data changed portion, that the dubbing speed is reduced. Therefore, as compared to the case that the recording bit rate is changed for the entire content data and thus low-speed dubbing is performed on the entire content data, it is possible to increase the overall (or average) dubbing speed and to reduce the time required to copy the entire content data.

(Structure of Information Recording Apparatus)

As shown in FIG. 1, the information recording apparatus 1 is provided with: a reading device 11; a dividing device 12; a recording bit rate / video resolution changing device 13 (hereinafter referred to as a "rate resolution changing device"); a recording device 14; and a control device 15.

The reading device 11 reads the content data in which the first video resolution is set, which is encoded at the first recording bit rate, and which is recorded on the first recording medium 2, from the first recording medium 2. If the first recording medium 2 is a hard disk, the reading device 11 can be provided with: a hard disk drive apparatus; a central processing unit or the like for controlling the hard disk drive apparatus; and the like.

The dividing device 12 divides the content data into the unchanged data portion and the changed data portion. The dividing device 12 can be provided with: a data processing circuit with a data processing function; a central processing unit or a multi processing unit; and the like.

The rate resolution changing device 13 changes the video resolution in the changed data portion from the first video resolution to the second video resolution, which is lower than the first video resolution. Moreover, the rate resolution changing device 13 changes the recording bit rate in the changed data portion from the first recording bit rate to the second recording bit rate, which is lower than the first recording bit rate. The rate resolution changing device 13 can be provided with: a data processing circuit with a data processing function; a central processing unit or a multi processing unit; and the like.

The recording device 14 records the unchanged data portion and the changed data portion in which the video resolution or the recording bit rate is changed by the rate resolution changing device 13, onto the second recording medium 3. If the second recording medium 3 is a DVD, the recording device can be provided with: a DVD drive apparatus; and a central processing unit or the like for controlling the DVD drive apparatus; and the like.

The control device 15 controls the reading device 11, the dividing device 12, the rate resolution changing device 13, and the recording device. The control device 15 can be provided with a central processing unit or a multi processing unit and the like.

Moreover, the dividing device 12 is desirably provided with a division position determining device 16. The division position determining device 16 determines the division position of the changed data portion and the unchanged data portion when the content data is divided, such that the sum of the size of the unchanged data portion and the size of the changed data portion after the video resolution or the recording bit rate is changed is equal to or less than the capacity of the unrecorded area of the second recording medium 3.

Moreover, the division position determining device 16 desirably determines the division position such that the sum of the size of the unchanged data portion and the size of the changed data portion after the video resolution or the recording bit rate is changed is maximal in a range of the capacity of the unrecorded area of the second recording medium 3. By this, it is possible to reduce a difference between the size of the content data recorded on the first recording medium 2 and the size of the content data recorded on the second recording medium 3 in the end. Therefore, it is possible to reduce the changed data portion in which the video resolution or the recording bit rate is to be changed. Thus, it is possible to reduce the time required to change the video resolution and the time required to change the recording bit rate in the changed data portion, to thereby further reduce the dubbing time.

Moreover, since it is possible to reduce the difference between the size of the content data recorded on the first recording medium 2 and the size of the content data recorded on the second recording medium 3 in the end, it is possible to reduce the extent that the size of the changed data portion is reduced by changing the video resolution or the recording bit rate. That is, it is possible to reduce the extent that the video resolution in the changed data portion is reduced and the recording bit rate in the changed data portion is reduced. That is, if the difference is small between the size of the content data recorded on the first recording medium 2 and the size of the content data recorded on the second recording medium 3 in the end, it is unnecessary to significantly reduce the size of the changed data portion by significantly reducing the video resolution or the recording bit rate in the changed data portion. Therefore, it is possible to reduce the dubbing time without significantly reducing the image quality in the change data portion.

The rate resolution changing device 13 is desirably provided with: a recording bit rate / video resolution determining device 17 (hereinafter referred to as a "rate resolution determining device 17"); a decoding device 18; and an encoding device 19. The rate resolution determining device 17 determines the second recording bit rate such that the sum of the size of the unchanged data portion and the size of the changed data portion after the video resolution or the recording bit rate is changed is equal to or less than the capacity of the unrecorded area of the second recording medium 3. The decoding device 18 decodes the changed data portion. The encoding device 19 encodes the change data portion decoded by the decoding device 18, at the second recording bit rate.

Moreover, the rate resolution determining device 17 desirably determines the second recording bit rate such that the sum of the size of the unchanged data portion and the size of the changed data portion after the video resolution or the recording bit rate is changed is maximal in a range of the capacity of the unrecorded area of the second recording medium 3. By this, it is possible to reduce the difference between the size of the content data recorded on the first recording medium 2 and the size of the content data recorded on the second recording medium 3 in the end. Therefore, it is possible to reduce the changed data portion in which the video resolution or the recording bit rate is to be changed. Thus, it is possible to reduce the time required to change the video resolution and the time required to change the recording bit rate in the changed data portion, to thereby further reduce the dubbing time.

Moreover, since it is possible to reduce the difference between the size of the content data recorded on the first recording medium 2 and the size of the content data recorded on the second recording medium 3 in the end, it is possible to reduce the extent that the size of the changed data portion is reduced by changing the video resolution or the recording bit rate. That is, it is possible to reduce the extent that the video resolution in the changed data portion is reduced and the recording bit rate in the changed data portion is reduced. That is, if the difference is small between the size of the content data recorded on the first recording medium 2 and the size of the content data recorded on the second recording medium 3 in the end, it is unnecessary to significantly reduce the size of the changed data portion by significantly reducing the video resolution or the recording bit rate in the changed data portion. Therefore, it is possible to reduce the dubbing time without significantly reducing the image quality in the change data portion.

If the content data recorded on the first recording medium 2 includes the video data and the audio data, it is desirable that the rate resolution changing device 13 preferentially reduces the recording bit rate of the audio data included in the changed data portion, rather than the recording bit rate of the video data included in the changed data portion. By this, it is possible to reduce the dubbing time while preventing a reduction in the image quality.

(Dubbing Operation 1)

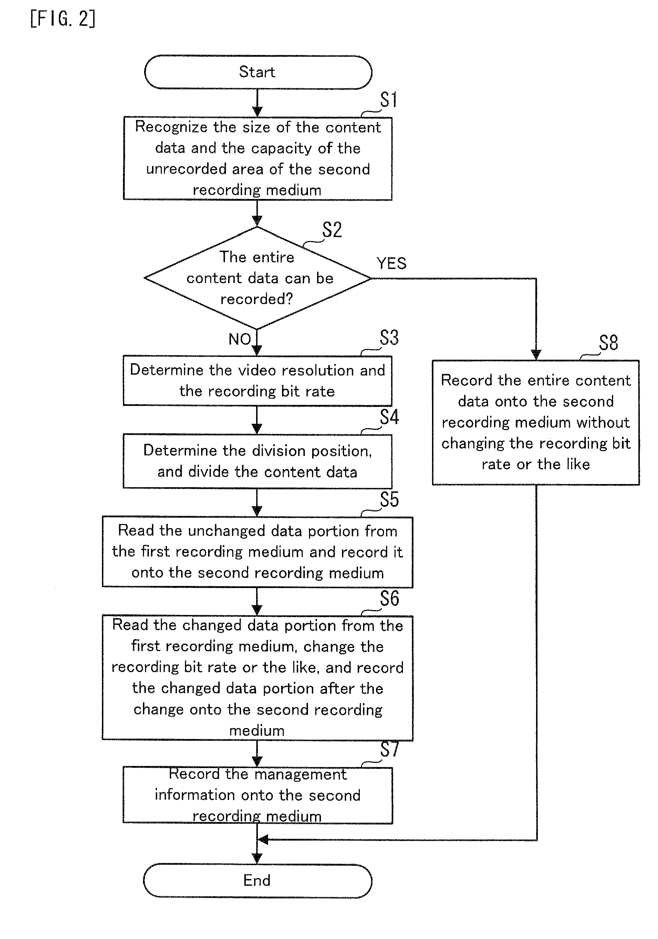

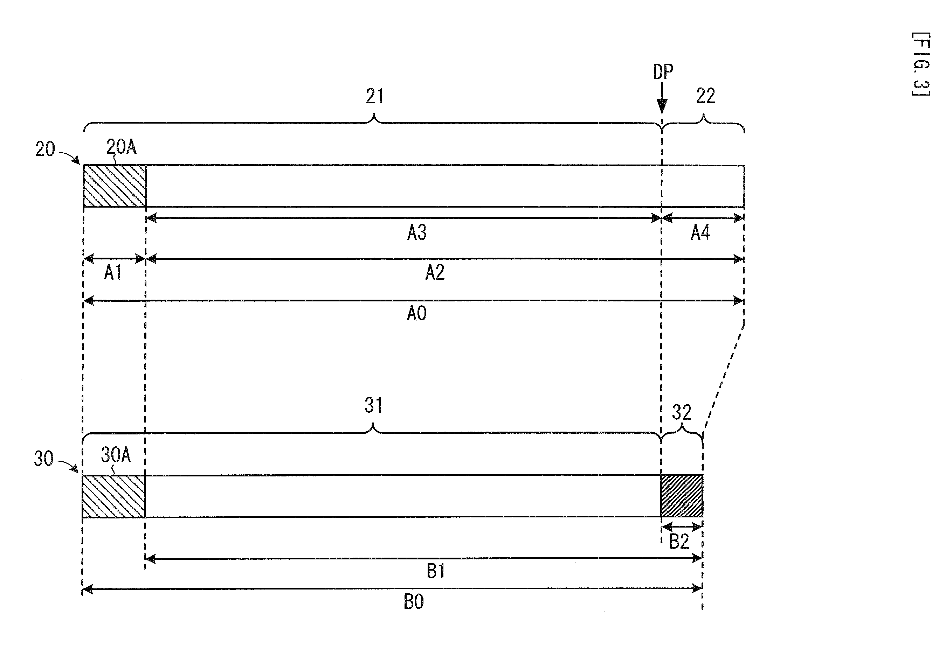

FIG. 2 shows a first dubbing operation of the information recording apparatus 1. FIG. 3 shows the content data recorded on the first recording medium 2 (in the upper part in FIG .3) and the content data recorded on the second recording medium 3 by the first dubbing operation (in the lower part in FIG. 3).

Before the dubbing operation is started, the information recording apparatus 1 is in the following state. That is, as shown in the upper part of FIG. 3, the first video resolution is set and content data 20 encoded at the first recording bit rate is recorded on the first recording medium 2. Moreover, it is ready for the recording device 14 to record the data onto the second recording medium 3 in the dubbing operation. For example, a DVD is loaded on a DVD drive apparatus.

In this state, if a user specifies the content data to be copied and inputs an instruction to start the dubbing for the information recording apparatus 1, the information recording apparatus 1 starts the dubbing operation. Incidentally, the specification of the content data 20 to be copied and the input of the instruction to start the dubbing are performed by the user operating an operation switch (not illustrated) mounted on a remote controller or the information recording apparatus 1, for example.

When the dubbing operation is started, as shown in FIG. 2, the control device 15 of the information recording apparatus 1 firstly recognizes a size A0 of the content data 20 recorded on the first recording medium 2 and a capacity B0 of the unrecorded area of the second recording medium 3 (step S1). The recognition of the size A0 of the content data 20 can be performed by reading management information 20A included in the content data 20 by using the reading device 11 and by referring to the management information 20A. Moreover, the recognition of the capacity B0 of the unrecorded area of the second recording medium 3 can be performed by reading and referring to management information recorded on the second recording medium 3.

Then, the control device 15 compares the size A0 of the content data 20 with the capacity B0 of the unrecorded area of the second recording medium 3. Then, the control device 15 judges whether or not the entire content data 20 can be recorded onto the second recording medium 3 (step S2). If the size A0 of the content data 20 is equal to or less than the capacity B0 of the unrecorded area of the second recording medium 3, the control device 15 judges that the entire content data 20 can be recorded onto the second recording medium 3. On the other hand, if the size A0 of the content data 20 is greater than the capacity B0 of the unrecorded area of the second recording medium 3, the control device 15 judges that the entire content data 20 cannot be recorded onto the second recording medium 3.

When the entire content data 20 cannot be recorded onto the second recording medium 3 (the step S2: NO), the information recording apparatus 1 divides the content data 20 into an unchanged data portion 21 and a changed data portion 22 in a step S4 and a step S6 later, and changes the video resolution or the recording bit rate of the changed data portion 22. As the preparation for these processes, the rate resolution determining device 17 determines the video resolution after the change in the changed data portion 22, i.e. the second video resolution, and the recording bit rate after the change in the changed data portion 22, i.e. the second recording bit rate (step S3).

The change in the changed data portion 22 is mainly intended to reduce the size of the changed data portion 22. The way to reduce the size of the changed data portion 22 includes: (i) a method of reducing the video resolution of the changed data portion 22; (ii) a method of reducing the recording bit rate of the changed data portion 22; and (iii) a method of reducing both the video resolution and the recording bit rate of the changed data portion. Incidentally it is general the recording bit rate is reduced when the video resolution of the changed data portion 22 is reduced. In the method of (iii), the recording bit rate is further reduced beyond the extent of the reduction in the recording bit rate caused by that the video resolution of the changed data portion 22 is reduced.

According to the method of (i) or (ii), although the image quality of a changed data portion 32 recorded on the second recording medium 3 by the dubbing operation is slightly reduced, the dubbing time can be reduced. According to the method of (iii), although the image quality of the changed data portion 32 is significantly reduced, the dubbing time can be significantly reduced.

In the step S3, the rate resolution determining device 17 firstly selects one of the aforementioned methods of (i) to (iii).

Incidentally, the user may be entrusted with the selection of any of the methods (i) to (iii). For example, a dubbing mode which gives preference to the image quality of the changed data portion 32 after the dubbing is set to a "mode A", and a dubbing mode which gives preference to the reduction in the dubbing time over the image quality of the changed data portion 32 is set to a "mode B". Then, the aforementioned method of (i) or (ii) is assigned to the mode A, and the aforementioned method of (iii) is assigned to the mode B. In the dubbing, a message to induce the selection of the dubbing modes is displayed on a small display apparatus (not illustrated) mounted on the information recording apparatus 1. Alternatively, the message may be displayed on a TV screen (not illustrated) connected to the information recording apparatus 1. When the user sees the message, the user operates an operation switch (not illustrated) mounted on a remote controller or the information recording apparatus 1 to input the instruction to select the dubbing mode to the information recording apparatus 1.

Alternatively, the user may be not entrusted with the selection of any of the aforementioned methods of (i) to (iii), but the rate resolution determining device 17 or the control device 15 or the like may automatically select any of the aforementioned methods of (i) to (iii). For example, if the size A0 of the content data 20 is significantly greater than the capacity B0 of the unrecorded area of the second recording medium, the method of (iii) is selected in order to increase a ratio of the reduction in the dubbing time.

Other than that, the method of (i) or (ii) is selected.

Then, in the step S3, the rate resolution determining device 17 determines the second video resolution and the second recording bit rate in accordance with any of the methods of (i) to (iii). When the method of (i) is selected, the rate resolution determining device 17 reduces the video resolution of the changed data portion 22 (e.g. changing from FD1 to HD1). That is, the rate resolution determining device 17 sets the second video resolution which is lower than the first video resolution. In this case, generally, the recording bit rate is also reduced in accordance with the reduction in the video resolution. As a result, the second video resolution which is lower than the first video resolution is set.

When the method of (ii) is selected, the rate resolution determining device 17 reduces the recording bit rate of the changed data portion 22 (e.g. changing from about 10Mbps to about 5Mbps). That is, the rate resolution determining device 17 sets the second recording bit rate which is lower than the first recording bit rate. In this case, the video resolution is maintained. As a result, the second video resolution which is equal to the first video resolution is set.

When the method of (iii) is selected, the rate resolution determining device 17 reduces both the video resolution and the recording bit rate of the changed data portion 22. That is, the rate resolution determining device 17 sets the second video resolution which is lower than the first video resolution and further sets the second recording bit rate which is lower than the first recording bit rate.

If the determination of the second video resolution and the second recording bit rate is completed, then the division position determining device 16 determines a division position DP of the content data 20 and divides the content data 20 into the unchanged data portion 21 and the changed data portion 22 at the division position DP (step S4).

For example, with regard to the changed data portion 22, if the video resolution is maintained and the recording bit rate is changed from the first recording bit rate to the second recording bit rate, the division position determining device 16 determines the division position as follows.

Firstly, a size A1 of management information 20A is subtracted from the size A0 of the entire content data 20 to be copied. By this, a size A2 of a portion other than the management information 20A of the content data 20 is obtained. The reason to obtain the size A2 of the portion other than the management information 20A of the content data 20 is that the management information 20A is not a change target of the recording bit rate or the video resolution according to the nature of the information.

Then, the size A1 of the management information 20A is subtracted from the capacity B0 of the unrecorded area of the second recording medium 3. By this, a capacity B1 of the unrecorded area of the content data 20 is obtained where the portion other than the management information 20A of the content data 20 can be recorded. Incidentally, FIG. 3 exemplifies the case that the entire recording area of the second recording medium 3 is unrecorded before the dubbing operation. If, however, another data is already recorded in one portion of the recording area of the second recording medium 3 before the dubbing operation, the same processes as the aforementioned and following processes are performed on the remaining unrecorded area.

Here, it is assumed that the size of the unchanged data portion 21 (which is not changed before or after the dubbing) is A3, that the size of the changed data portion 22 before the change in the recording bit rate is A4, that the first recording bit rate is R1, and that the second recording bit rate is R2. Under this assumption, the following equations (1) and (2) hold true.

$$A3 + A4 = A2 \quad (1)$$

$$A3 + R2 / R1 \cdot A4 = B1 \quad (2)$$

From the two equations, the size A3 of the unchanged data portion 21 and the size A4 of the changed data portion 22 before the change in the recording bit rate are calculated. Then, on the basis of the size A3 or A4, the division position DP of the content data 20 is determined.

Now, using specific numerical values, an explanation will be given on the determination of the division position DP of the content data 20.

It is assumed that the content data 20 recorded on the first recording medium 2 is 2-hour video data encoded at the recording bit rate 10Mbps. The size A0 of the entire content data is

$$10 \text{Mbit} \times 2 \times 60 \times 60 \div 8 = 9 \text{ gigabytes.}$$

On the other hand, it is assumed that the second recording medium is an unused dual-layer DVD-R (dual-layer DVD-Recordable) in which the entire recording area is unrecorded and that the capacity B0 of the unrecorded area is 8.54 gigabytes. Comparing the size A0 of the content data 20 with the capacity B0 of the unrecorded area of the second recording medium 3, the size of the content data 20 is greater. Thus, the content data 20 is divided into the unchanged data portion 21 and the changed data portion 22, and for example, with the video resolution of the changed data portion 22 maintained, the recording bit rate of the changed data portion 22 is changed from 10Mbps to 5Mbps. That is, in this example, a first recording bit rate R1 is 10Mbps, and a second recording bit rate R2 is 5Mbps.

If the size of the management information 20A included in the content data 20 is 0.025 gigabytes, the size A2 of the portion other than the management information 20A of the content data 20 is

$$9 - 0.025 = 8.975 \text{ gigabytes.}$$

Moreover, the capacity B1 of the unrecorded area of the second recording medium 3 where the portion other than the management information 20A of the content data 20 can be recorded is

$$8.54 - 0.025 = 8.515 \text{ gigabytes.}$$

If such specific numerical values are applied to the aforementioned equations (1) and (2), the following is obtained.

$$A3 + A4 = 8.975$$

$$A3 + 5 / 10 \times A4 = 8.515$$

From the two equations, A3 is 8.055 gigabytes, and A4 is 0.92 gigabytes. Since the size A0 of the entire content data 20 and the size A1 of the management information 20A are already known, the division position DP (e.g. address number) can be calculated from those values and the value of A3 or A4.

If the division position DP is determined and the division of the content data 20 is completed, then the reading device 11 reads the unchanged data portion 21 from the first recording medium 2, and records it into the unrecorded area of the second recording medium 3 in the encoded state at the first video resolution and the first recording bit rate (step S5 in FIG. 2). For example, if the size A3 of the unchanged data portion 21 is 8.515 gigabytes, the time required for the dubbing of the unchanged data portion 21 is about 24 minutes by performing 4-time speed dubbing. A calculation formula to obtain this is as follows.

$$8.055 \text{ gigabytes } \times 8 \div 11.08 \text{ Mbps} \div 4 \div 60 = 24.2 \text{ minutes} \quad (3)$$

Incidentally, when the unchanged data portion 21 is recorded onto the second recording medium 3, an area for recording management information 30A is reserved in the unrecorded area of the second recording medium 3.

Then, the rate resolution changing device 13 changes the video resolution or the recording bit rate of the changed data portion 22. Specifically, firstly, the reading device 11 reads the changed data portion 22 from the first recording medium 2. Then, the decoding device 18 decodes the read changed data portion 22. Then, the encoding device 19 encodes the decoded changed data portion 22 at the second video resolution and the second recording bit rate. By this, the changed data portion 22 reduces in size and becomes the changed data portion32. Then, the recording device 14 records the change data portion 32 into the unrecorded area of the second recording medium 3 (step S6).

For example, if the size A4 of the changed data portion is 0.92 gigabytes, the first recording bit rate R1 is 10Mbps, and the second recording bit rate R2 is 5Mbps, and if the recording bit rate is changed from the first recording bit rate R1 to the second recording bit rate R2 with the video resolution of the changed data portion 22 maintained, the time required for the dubbing of the changed data portion 22 is about 12 minutes. A calculation formula to obtain this is as follows.

$$0.92 \text{ gigabytes} \times 8 \div 10 \text{ Mbps} \div 60 = 12.3 \text{ minutes} \quad (4)$$

Moreover, the changed data portion 22 after the change in the recording bit rate, i.e. a size B2 of the changed data portion 32 is

$$B2 = R2 / R1 \cdot A4.$$

If the aforementioned numerical values (A4 = 0.92 gigabytes, R1 = 10Mbps, R2 = 5Mbps) are applied to this equation, B2 is 0.46 gigabytes.

Then, the control device 15 generates the management information 30A of the changed data portion 32 and an unchanged data portion 31 recorded on the second recording medium 3, and records it onto the second recording medium 3 (step S7).

By virtue of such a dubbing operation, content data 30 is recorded, as shown in the lower part of FIG. 3, onto the second recording medium 3. In the content data 30, the unchanged data portion 31 has the same size and the same video resolution and the same recording bit rate as those of the unchanged data portion 21 of the content data 20 in the upper part of FIG. 3. Of course, the content matter is also the same. On the other hand, the changed data portion 32 of the content data 30 has the size and the video resolution or the recording bit rate lower than those of the changed data portion 22 of the content data 20. The changed data portion 32 has higher data compressibility because of the reduction in the video resolution or the recording bit rate, resulting in a reduction in size; however, the content matter is the same as that of the changed data portion 22.

Confirming the size of the content data 30 by using the aforementioned specific numerical value, the size of the management information 30A is 0.025 gigabytes, the size of the unchanged data portion is 8.055 gigabytes, and the size B2 of the changed data portion 32 is 0.46 gigabytes. Thus, the size of the content data 30 is 8.54 gigabytes. This is the same as the capacity B0 of the unrecorded area of the second recording medium 3 (dual-layer DVD-R).

On the other hand, in the step S2 in FIG. 2, if the entire content data 20 can be recorded onto the second recording medium 3 (the step S2: YES), the reading device 11 sequentially reads the entire content data 20 from the first recording medium 2 and sequentially records it onto the second recording medium 3 in the encoded state at the first video resolution and the first recording bit rate (step S8).

As explained above, according to the information recording medium 1, when the size A0 of the content data 20 is greater than the capacity B0 of the unrecorded area of the second recording medium 3, the content data 20 is divided into the unchanged data portion 21 and the changed data portion 22, and the video resolution of the recording bit rate is changed only in the changed data portion 22. Therefore, the dubbing can be performed at high speed in a short time in the unchanged data portion 21, which enables the dubbing time to be reduced. That is, it is only one portion of the content data 20, i.e. the data changed portion 22 that the dubbing speed is low-speed. Therefore, as compared to the case that the recording bit rate is changed for the entire content data and thus low-speed dubbing is performed on the entire content data, it is possible to increase the overall (or average) dubbing speed and to reduce the time required to copy the entire content data 20.

For example, in the case that the content data is 2-hour video data encoded at a recording bit rate of 10Mbps, if the entire content data is copied at low speed the same as the reproduction speed, the dubbing time is 120 minutes. In contrast, according to the first dubbing operation on the information recording apparatus 1, the dubbing time is about 37 minutes from the aforementioned calculation formulas (3) and (4). As described above, according to the information recording apparatus 1, it is possible to reduce the dubbing time by about 83 minutes.

Incidentally, in the dubbing operation of the information recording apparatus 1 described above, the size A4 of the changed data portion 22 is calculated by using the equations (1) and (2), and the calculation result is used as it is. In this case, theoretically, the content data 30 after the dubbing fits into the unrecorded area of the second recording medium 3. In the actual dubbing operation, however, the size A4 of the changed data portion 22 is desirably set to be greater than the calculation result obtained by the equations (1) and (2) so that the content data 30 after the dubbing is included in the unrecorded area of the second recording medium 3 with area to spare.

Moreover, the aforementioned dubbing operation exemplifies the case that the unchanged data portion is read and recorded, then the changed data portion is read and the rate / resolution is changed and recorded, and then the management information is generated and recorded. However, after the change in the rate / resolution of the changed data portion and the generation of the management information, the management information, the unchanged data portion, and the changed data portion may be recorded onto the second recording medium 3 at a time. For example, the change in the rate / resolution of the changed data portion and the generation of the management information are performed on the first recording medium 2. Then, the management information, the unchanged data portion, and the changed data portion are read from the first recording medium 2 in the order to record them onto the second recording medium 3, and these are sequentially recorded onto the second recording medium 3.

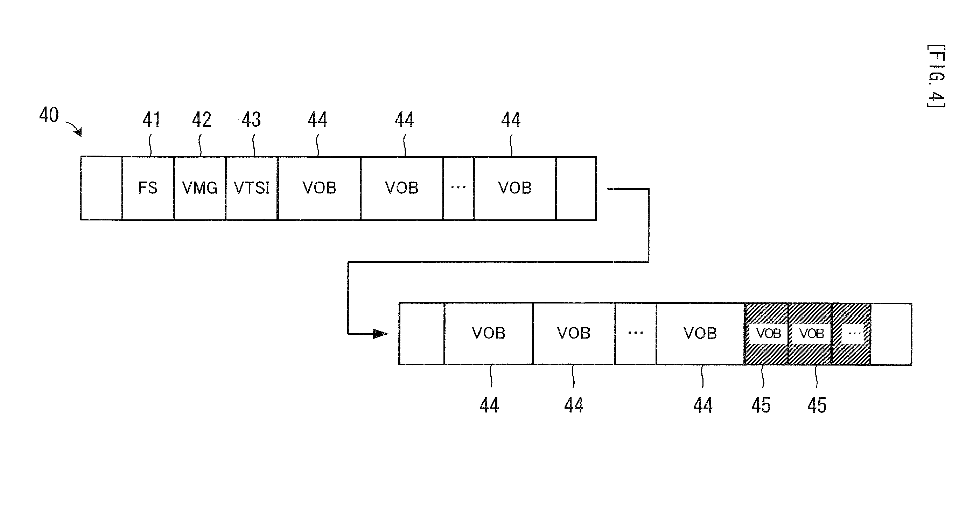

FIG. 4 shows one example of the content data recorded on the second recording medium 3 by the first dubbing operation of the information recording apparatus 1. In this example, the second recording medium 3 is a dual-layer DVD-R, and the format of the content data is a DVD video format. As shown in FIG. 4, in content data 40, a file system (FS) 41, a video manager (VMG) 42, and a video title set information (VTSI) 43 all correspond to the management information. A plurality of video objects (VOBs) 44 constitute the unchanged data portion. Moreover, a plurality of video objects (VOBs) 45 constitute the changed data portion. The video objects 44 are recorded on the second recording medium 3 in the encoded state at the first video resolution and the first recording bit rate. On the other hand, the video objects 45 are recorded with the video resolution changed to the second video resolution and with the recording bit rate changed to the second recording bit rate. As a result, before the dubbing, the size of the video object 45 is averagely substantially the same as the size of the video object 44; however, after the dubbing, the size of the video object 45 is averagely smaller than the size of the video object 44.

Moreover, if the format of the content data is the DVD video format, the division position is determined such that the division position of the content data matches the boundary between the video object and the video object in the dubbing operation. Thus, the video resolution is not changed in the middle of the video object, and the standard of the DVD video format is not violated. Incidentally, one video object can be divided into two video objects. Thus, the division position may be determined so as to match the boundary of two video objects after one video object can be divided into the two video objects. Moreover, for example, when the division position is determined, an image corresponding to the division position in the content data may be temporarily displayed on a display (TV screen or the like), and after that the division position may be adjusted by the user. For example, the user operates an operation switch mounted on a remote controller or the information recording apparatus 1 and controls such that the division position matches the boundary of the video objects, as described above, if needed when determining the division position desired by the user. By this, it is possible to prevent the reduction in the image quality in an important scene for the user.

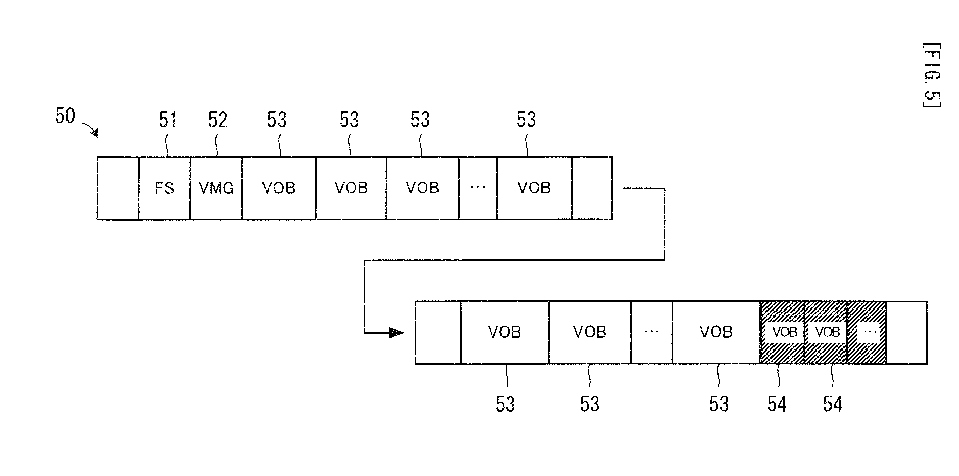

FIG. 5 shows another example of the content data recorded on the second recording medium 3 by the first dubbing operation of the information recording apparatus 1. In this example, the second recording medium 3 is a dual-layer DVD-R, and the content data is a VR (Video Recording) format. As shown in FIG. 5, in content data 50, a file system (FS) 51 and a video manager (VMG) 52 all correspond to the management information. A plurality of video objects (VOBs) 53 constitute the unchanged data portion. Moreover, a plurality of video objects (VOBs) 54 constitute the changed data portion.

(Dubbing Operation 2)

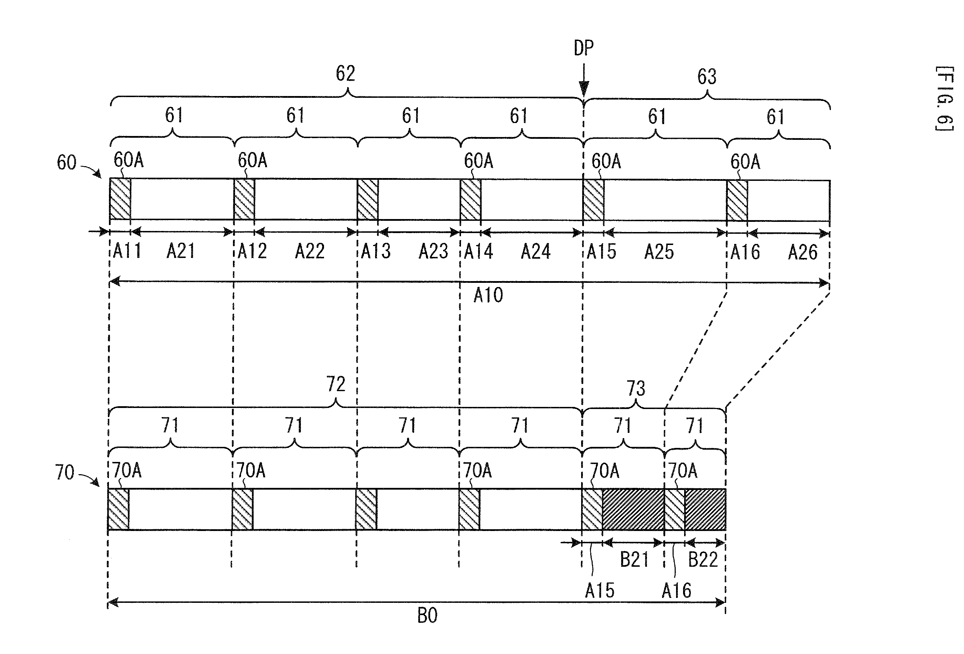

FIG. 6 shows the content data recorded on the first recording medium 2 (in the upper part in FIG. 6) and the content data recorded on the second recording medium 3 by a second dubbing operation (in the lower part in FIG. 6). As shown in the upper part in FIG. 6, if content data 60 to be copied is divided into a plurality of (six data groups in the example of FIG. 6) data groups 61 (for example, titles in the DVD video format), the information recording apparatus 1 may perform the second dubbing operation instead of the first dubbing operation.

In the second dubbing operation, the division position DP is determined so as to match the boundary of the data group 61 and the data group 61. Incidentally, the second dubbing operation is substantially the same as the first dubbing operation, except for the method of determining the division position DP.

In the second dubbing operation, the division position determining device 16 determines the division position DP as follows. Firstly, the size of management information 60A is subtracted from a size A10 of the entire content data 60 to be copied. As shown in FIG. 6, if the management information 60A exists in each of the data groups 61, the sum of the size of the management information 60A in all the data groups 61 included in the content data 20 (A11+A12+...+A16) is calculated, and this sum value is subtracted from the size A10 of the entire content data. By this, the size of a portion other than the management information 60A of the content data 60 (A21+A22+...+A26) is obtained.

Then, the size of the management information 50A (the sum value of the size of the all the management information 60A if the plurality of management information 60 A exist as shown in FIG. 6) is subtracted from the capacity B0 of the unrecorded area of the second recording medium 3. By this, it is possible to obtain the capacity of the unrecorded area of the second recording medium 3 where the portion other than the management information 60A of the content data 60 can be recorded.

Then, the size of an unchanged data portion 62 and the size of a changed data portion 63 are determined. Firstly, on the basis of the aforementioned equations (1) and (2), the theoretical minimum size of the changed data portion 63 and the size of the unchanged data portion 62 at this time are calculated. Then, on the basis of the calculated size of the unchanged data portion 62 or the calculated size of the changed data portion 63, a temporary division position is determined. The method of determining this temporary division position is the same as the method of determining the division position in the first dubbing operation.

Then, the boundary of the data group and the data group is found out, wherein the boundary is located on the head side of the content data 60 from the temporary division position and is located closest to the temporary division position. Then, the official division position DP is set at the found boundary.

By the second dubbing operation, content data 70 is recorded, as shown in the lower part in FIG. 6, on the second recording medium 3. In the content data 70, an unchanged data portion 72 has the same size and the same video resolution and recording bit rate as those of the unchanged data portion 62 of the content data 60 in the upper part in FIG. 6. Moreover, the unchanged data portion 72 is also the same as the unchanged data portion 62 in that the unchanged data portion 72 is divided into a plurality of data groups 71 and in that management information 70A exists in each of the data groups. Of course, the content matter is also the same. On the other hand, the changed data portion 73 of the content data 70 has the video resolution or the recording bit rate lower than those of the changed data portion 63 of the content data 60, and the size of the portion other than the management information 70A (B1+B2) is also lower. The changed data portion 73 has higher data compressibility because of the reduction in the video resolution or the recording bit rate, resulting in a reduction in size in the portion other than the management information 70A; however, the changed data portion 73 is the same as the changed data portion 63 in that it is divided into the plurality of data groups 71, and its content matter is the same as that of the changed data portion 63.

As explained above, in the second dubbing operation, the division position DP is determined so as to match the boundary of the data group 61 and the data group 61. By this, the content data is assigned to the changed data portion by a data unit. As a result, the reduction in the image quality because of the change in the video resolution or the recording bit rate is also performed by the data unit. Therefore, if the content data recorded on the second recording medium 3 after the dubbing is reproduced, the image quality changes at the time of changing the data group. As compared to the case that the image quality changes in the middle of the reproduction of the data group, in the case that the image quality changes at the time of changing the data group, the change in the image quality becomes less obvious, or the user feels less uncomfortable about the change in the image quality. As described above, according to the second dubbing operation, it is possible to obscure the change in the image quality.

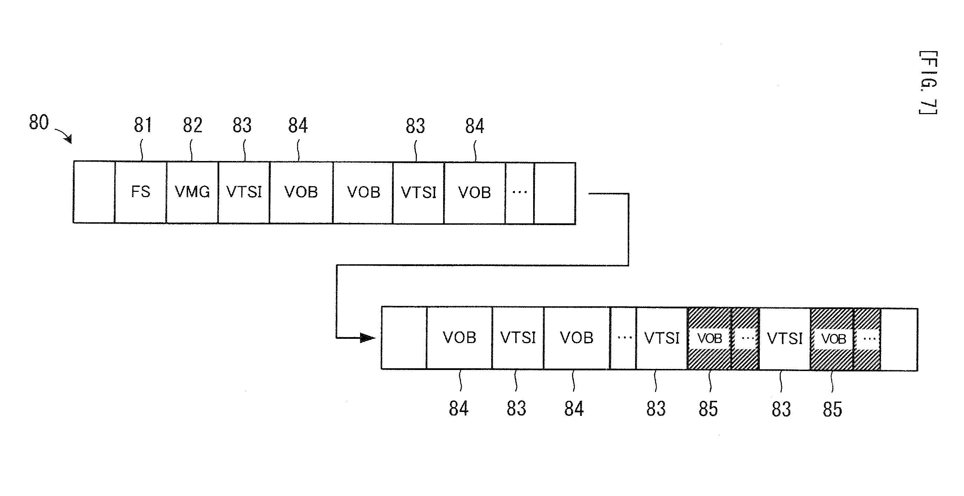

FIG. 7 shows one example of the content data recorded on the second recording medium 3 by the second dubbing operation. In this case, the second recording medium 3 is a dual-layer DVD-R and the format of the content data is the DVD video format. As shown in FIG. 7, in content data 80, a file system (FS) 81, a video manager (VMG) 82, and a plurality of video title set information (VTSI) 83 all correspond to the management information. The content data 80 is divided into a plurality of titles, and the video title set information 83 exists in each of the titles. A plurality of video objects (VOBs) 84 constitute the unchanged data portion. Moreover, a plurality of video objects (VOBs) 85 constitute the changed data portion.

Incidentally, even if there are a plurality of content data to be copied, the second dubbing operation can be applied. In this case, the division position DP is determined so as to match the boundary of the content data and the content data.

(Dubbing Operation 3)

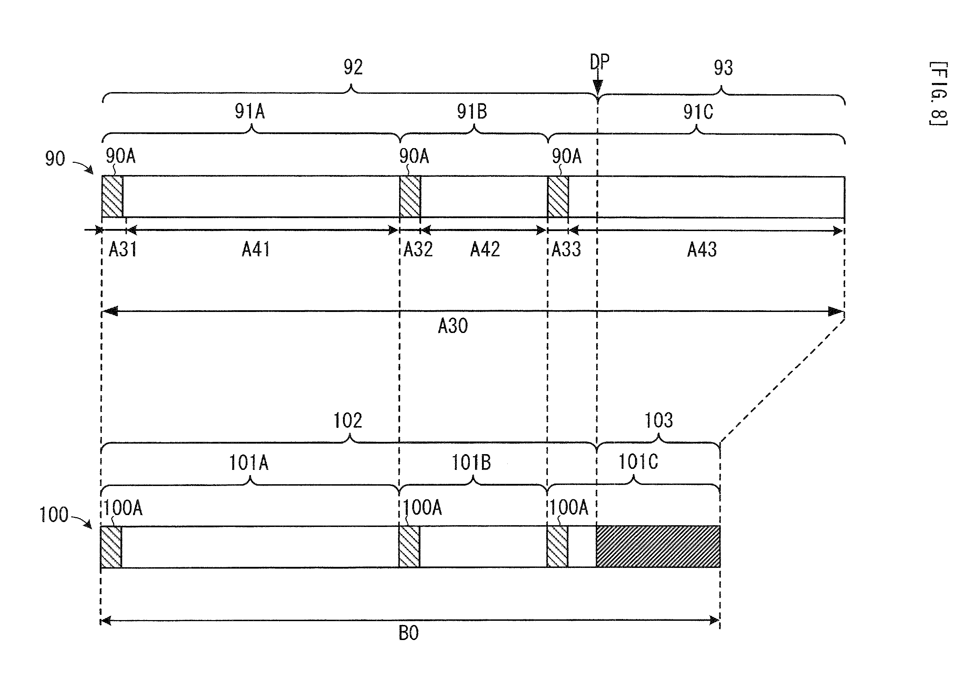

FIG. 8 shows the content data recorded on the first recording medium 2 (in the upper part in FIG. 8) and the content data recorded on the second recording medium 3 by a third dubbing operation (in the lower part in FIG. 8). As shown in the upper part in FIG. 8, if content data 90 to be copied is divided into a plurality of data groups 91A, 91B, and 91C and the data groups 91A, 91B, and 91C further includes a data group with the higher recording bit rate than those of the other data groups, the information recording apparatus 1 may perform the third dubbing operation instead of the first or second dubbing operation.

In the third dubbing operation, a part or all of the data unit encoded at the highest recording bit rate from among the data groups 91A, 91B, and 91C in the content data 90 is assigned to the changed data portion, and the division position DP is determined so as to realize the assignment. Incidentally, the third dubbing operation is substantially the same as the first dubbing operation, except for the method of determining the division position DP.

For example, if the data group encoded at the highest recording bit rate from among the data groups 91A, 91B, and 91C in the content data 90 is 91C, the division position determining device 16 determines the division position DP such that one portion of the data unit 91C is assigned to a changed data portion 93. As a result, the division position DP is set to any position in the data unit 91C.

In this example, the division position determining device 16 determines the division position DP as follows. Firstly, the sum value of the size of a plurality of management information 90A (A31+A32+A33) is subtracted from a size A30 of the entire content data 90 to be copied. By this, the size of a portion other than the management information 90A of the content data 90 (A41+A42+A43+A44) is obtained.

Then, the sum value of the size of the management information 90A is subtracted from the capacity B0 of the unrecorded area of the second recording medium 3. By this, it is possible to obtain the capacity of the unrecorded area of the second recording medium 3 where the portion other than the management information 90A of the content data 90 can be recorded.

Then, on the basis of the aforementioned equations (1) and (2), the size of an unchanged data portion 92 and the size of the changed data portion 93 are determined. Then, the division position DP is determined on the basis of the calculated size of the unchanged data portion 92 and the calculated size of the changed data portion 93. At this time, the division position DP is determined such that one portion of the data unit 91C having the highest recording bit rate is assigned to the changed data portion 93.

By the third dubbing operation, content data 100 is recorded, as shown in the lower part in FIG. 8, onto the second recording medium 3. In the content data 100, an unchanged data portion 102 has the same size and the same video resolution and the same recording bit rate as those of the unchanged data portion 92 of the content data 90 in the upper part of FIG. 8. Moreover, the unchanged data portion 102 is also the same as the unchanged data 92 in that the unchanged data portion 102 is divided into a plurality of data groups 101A, 101B, and 101C. Of course, the content matter is also the same. On the other hand, a changed data portion 103 of the content data 100 has the size and the video resolution or the recording bit rate lower than those of the changed data portion 93 of the content data 90. The changed data portion 103 has higher data compressibility because of the reduction in the video resolution or the recording bit rate, resulting in a reduction in size; however, the content matter is the same as that of the changed data portion 93.

Incidentally, the entire data unit 91C having the highest recording bit rate may be assigned to the changed data portion 93. In this case, the division position DP is set to the boundary of the data unit 91B and the data unit 91C.

Moreover, if the data group encoded at the highest recording bit rate from among the data groups 91A, 91B, and 91C in the content data 90 is 91A, the division position determining device 16 assigns a part or all of the data unit 91A to the changed data portion. As a result, the division position DP is set to any position in the data unit 91A or the boundary of the data unit 91A and the data unit 91B

As explained above, in the third dubbing operation, a part or all of the data unit encoded at the highest recording bit rate is assigned to the changed data portion. By this, it is possible to reduce the dubbing time. That is, before the process of changing the recording bit rate, if there are two content data with the same size but different recording bit rates, the content data with the higher recording bit of the two data has the shorter reproduction time. Thus, the content data with the higher recording bit of the two data allows the faster process of changing the recording bit rate. That is, as the recording bit rate increases, the process of changing the recording bit rate becomes faster. Therefore, by assigning a part or all of the of the data unit encoded at the highest recording bit rate to the changed data portion, it is possible to speed up the process of changing the recording bit rate, to thereby reduce the dubbing time.

Incidentally, even if there are a plurality of content data to be copied, the third dubbing operation can be applied. In this case, a part or all of the data unit encoded at the highest recording bit rate is assigned to the changed data portion.

(Dubbing Operation 4)

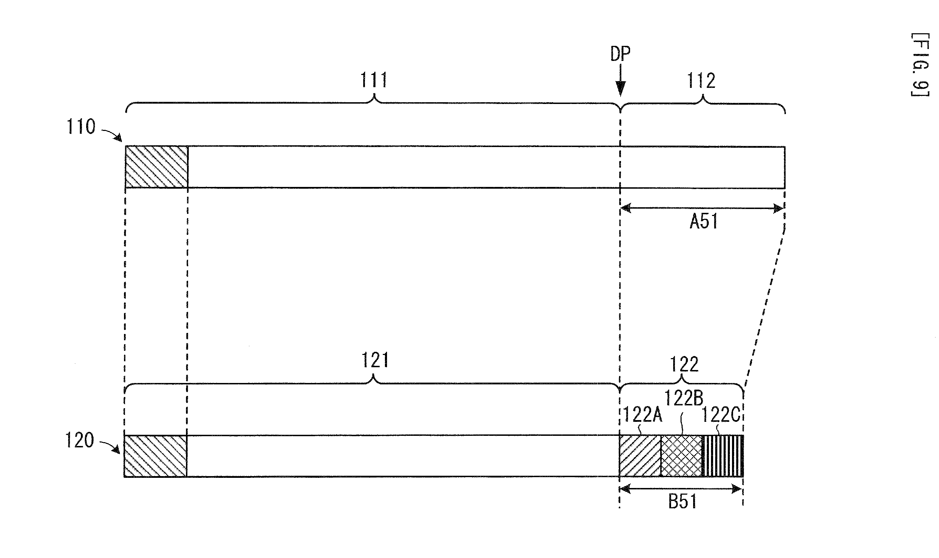

FIG. 9 shows the content data recorded on the first recording medium 2 (in the upper part in FIG. 9) and the content data recorded on the second recording medium 3 by a fourth dubbing operation (in the lower part in FIG. 9). The information recording apparatus 1 may perform the fourth dubbing operation instead of the first to third dubbing operations. In the fourth dubbing operation, content data 110 recorded on the first recording medium 2 is divided into an unchanged data portion 111 and a changed data portion 112 at the division position DP, and the video resolution is gradually reduced from the head to the tail of the changed data portion 112. For example, the video resolution of the changed data portion 112 is reduced at three steps. As a result, a changed data portion 122 of content data 120 recorded on the second recording medium 3 by this dubbing operation is provided, as shown in FIG. 9, with three data portions 122A, 122B, and 122C with different video resolution. The video resolution of the data portion 122A is lower than that of an unchanged data portion 121, and the video resolution of the data portion 122B is lower than that of the data portion 122A, and the video resolution of the data portion 122C is lower than that of the data portion 122B.

By gradually reducing the video resolution of the changed data portion, it is possible to make the reduction in the video resolution unnoticeable for the user. By this, it is possible to obscure the change in the image quality while reducing the size of the changed data portion.

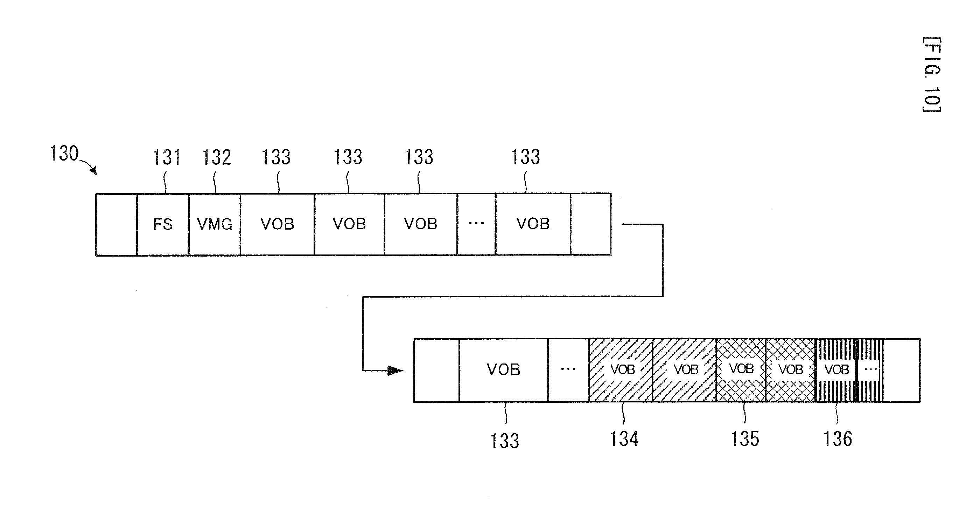

FIG. 10 shows one example of the content data recorded on the second recording medium 3 by the fourth dubbing operation. In this example, the second recording medium 3 is a dual-layer DVD-R, and the content data is the VR format. As shown in FIG. 10, in content data 130, a file system (FS) 131 and a video manager (VMG) 132 correspond to the management information. A plurality of video objects (VOBs) 133 constitute the unchanged data portion. Moreover, a plurality of video objects (VOBs) 134, 135, and 136 constitute the changed data portion. The video resolution of the video objects 133, 134, 135, and 136 are gradually reduced. That is, the video resolution of the video object 134 is lower than that of the video object 133, and the video resolution of the video object 135 is lower than that of the video object 134, and the video resolution of the video object 136 is lower than that of the video object 135.

(Hard Disk Built-in DVD Recorder)

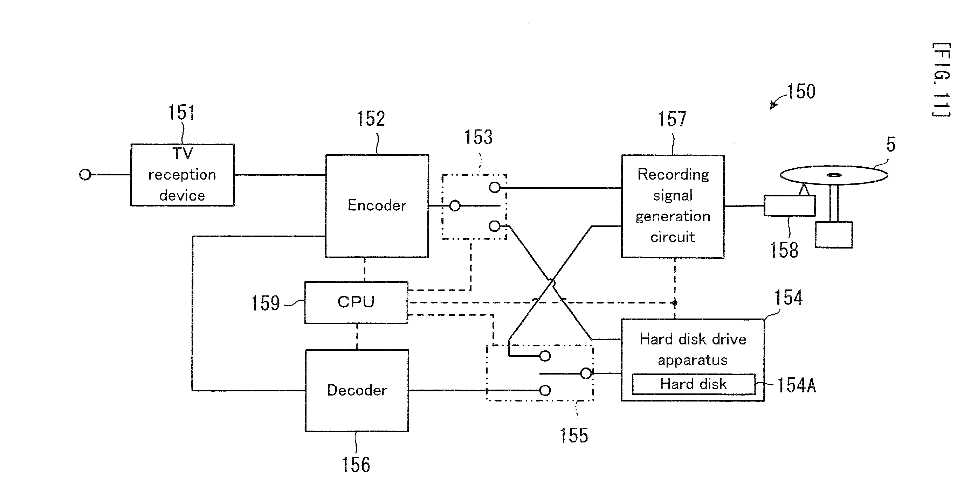

FIG. 11 shows one example of the case that the present invention is applied to a hard disk drive built-in DVD recorder.

A hard disk drive built-in DVD recorder 150 is provided with: a TV reception circuit 151; an encoder 152; a selector switch 153; a hard disk drive apparatus 154; a selector switch 155; a decoder 156; a recording signal generation circuit 157; an optical pickup 158; and a central processing unit (CPU) 159. The hard disk drive apparatus 154 contains a hard disk 154A.

The DVD recorder 150 has a function of recording a television program transmitted from a television broadcast station, onto the hard disk 154A. When recording the television program transmitted from a television broadcast station onto the hard disk 154A, the DVD recorder 150 operates as follows. Firstly, the CPU 159 controls the selector switch 153 to connect the encoder 152 and the hard disk drive apparatus 154. Then, the CPU 159 controls the encoder 152, sets the video resolution in an encoding process to the first video resolution, and further sets the recording bit rate in the encoding process to the first recording bit rate. The, the TV reception circuit 151 receives the television program from the television broadcast station. This television program is supplied as the content data to the encoder 152. The encoder 152 encodes the content data at the first video resolution and the first recording bit rate. Then, the hard disk drive apparatus 154 records the encoded content data onto the hard disk 154A.

The DVD recorder 150 has a function of copying or dubbing the content data recorded on the hard disk 154A to a dual-layer DVD-R5. When copying the content data recorded on the hard disk 154A to the dual-layer DVD-R5, the DVD recorder 150 operation as follows. Firstly, the CPU 159 compares the size of the content data to be copied, which is recorded on the hard disk 154A, with the capacity of an unrecorded area of the dual-layer DVD-R5. Then, if the size of the content data is greater than the capacity of the unrecorded area of the dual-layer DVD-R5, the CPU 159 determines the second video resolution and the second recording bit rate in accordance with the procedure shown in FIG. 2. As described above, the second recording bit rate is lower than the first recording bit rate. Moreover, the second video resolution is equal to or lower than the first video resolution. Moreover, the CPU 159 determines the division position of the content data, and divides the content data into the unchanged data portion and the changed data portion at the division position. Then, the CPU 159 controls the selector switch 155 to connect the hard disk drive apparatus 154 and the recording signal generation circuit 157. Then, the CPU 159 reads the unchanged data portion from the hard disk 154A and supplies it to the recording signal generation circuit 157. The recording signal generation circuit 157 converts the unchanged data portion to a recording pulse signal and supplies it to the optical pickup 158. The optical pickup 158 records the recording pulse signal onto the dual-layer DVD-R5. By this, the unchanged data portion is recorded onto the dual-layer DVD-R5. When the recording of the unchanged data portion onto the dual-layer DVD-R5 is completed, the CPU 159 controls the selector switch 155 to connect the hard disk drive apparatus 154 and the decoder 156. Then, the CPU 159 controls the selector switch 153 to connect the encoder 152 and the recording signal generation circuit 157. Then, the CPU 159 controls the encoder 152, sets the video resolution in the encoding process to the second video resolution, and further sets the recording bit rate in the encoding process to the second recording bit rate. Then, the CPU 159 reads the changed data portion from the hard disk 154A and supplies it to the decoder 156. The decoder 156 decodes the changed data portion and supplies the decoded changed data portion to the encoder 152. The encoder 152 encodes the decoded changed data portion at the second video resolution and the second recording bit rate. The encoded changed data portion is supplied to the recording signal generation circuit 157. The recording signal generation circuit 157 converts the changed data portion to the recording pulse signal and supplies it to the optical pickup 158. The optical pickup 158 records the recording pulse signal onto the dual-layer DVD-R5. By this, the changed data portion is recorded onto the dual-layer DVD-R5. After that, the CPU 159 generates the management information or the like and records it onto the dual-layer DVD-R5 through the recording signal generation circuit 157.

As described above, if the size of the content data to be copied is greater than the capacity of the unrecorded area of the dual-layer DVD-R5, the hard disk drive built-in DVD recorder 150 divides the content data into the unchanged data portion and the changed data portion and changes the video resolution or the recording bit rate only in the changed data portion. By this, the dubbing can be performed at high speed (e.g. 4-time speed dubbing) in a short time in the unchanged data portion. By this, it is possible to reduce the dubbing time.

Incidentally, the aforementioned embodiment exemplifies the case that the information recording apparatus of the present invention is realized as a hardware product like the hard disk drive built-in DVD recorder 150. The present invention, however, is not limited to this. The information recording apparatus of the present invention can be realized on a computer by making the computer read a program. In this case, the computer program is prepared to make the computer function as the reading device 11, the dividing device 12, the rate resolution changing device 13, the recording device 14, and the control device 15.

Moreover, in the information recording apparatus 1 in FIG. 1, the reading device 11 is a specific example of the reading device, the dividing device 12 is a specific example of the dividing device, the rate resolution changing device 13 is a specific example of the recording bit rate changing device and the video resolution changing device, and the recording device 14 is a specific example of the recording device. Moreover, the division position determining device 16 is a specific example of the division position determining device, the rate resolution determining device 17 is a specific example of the recording bit rate determining device and the video resolution determining device, the decoding device 18 is a specific example of the decoding device, and the encoding device 19 is a specific example of the encoding device.

Moreover, in FIG. 2, the step S4 is a specific example of the dividing process, the step S5 is a specific example of the recording process, and the step S6 is a specific example of the reading process, the recording bit rate changing process, the video resolution changing process, and the recording process.

Moreover, in the present invention, various changes may be made without departing from the essence or spirit of the invention which can be read from the claims and the entire specification. An information recording apparatus, an information recording method, and a computer program, which involve such changes, are also intended to be within the technical scope of the present invention.

Industrial Applicability

The information recording apparatus and the information recording method according to the present invention can be applied to an information recording apparatus, such as a DVD recorder. Moreover, they can be applied to an information recording apparatus or the like which is mounted on various computer equipment for consumer use or for commercial use, or which can be connected to various computer equipment.

**Claims**

1. An information recording apparatus having a function of reading content data recorded on a first recording medium and of recording the content data onto a second recording medium, said information recording apparatus comprising:

   a reading device for reading the content data, which is encoded at a first recording bit rate and which is recorded on the first recording medium, from the first recording medium;
   a dividing device for dividing the content data into an unchanged data portion and a changed data portion;
   a recording bit rate changing device for changing a recording bit rate of the changed data portion from the first recording bit rate to a second recording bit rate which is lower than the first recording bit rate; and
   a recording device for recording the unchanged data portion and the changed data portion in which the recording bit rate is changed by said recording bit rate changing device, onto the second recording medium.

2. The information recording apparatus according to claim 1, wherein said dividing device comprises a division position determining device for determining a division position of the unchanged data portion and the changed data portion when the content data is divided, such that a sum of a size of the unchanged data portion and a size of the changed data portion in which the recording bit rate is changed by said recording bit rate changing device is equal to or less than a capacity of an unrecorded area of the second recording medium.

3. The information recording apparatus according to claim 2, wherein the division position determining device determines the division position such that the sum of the size of the unchanged data portion and the size of the changed data portion in which the recording bit rate is changed by said recording bit rate changing device is maximal in a range of the capacity of the unrecorded area of the second recording medium.

4. The information recording apparatus according to claim 1, wherein said recording bit rate changing device comprises a recording bit rate determining device for determining the second recording bit rate, such that a sum of a size of the unchanged data portion and a size of the changed data portion in which the recording bit rate is changed by said recording bit rate changing device is equal to or less than a capacity of an unrecorded area of the second recording medium.

5. The information recording apparatus according to claim 4, wherein the recording bit rate determining device determines the second recording bit rate such that the sum of the size of the unchanged data portion and the size of the changed data portion in which the recording bit rate is changed by said recording bit rate changing device is maximal in a range of the capacity of the unrecorded area of the second recording medium.

6. The information recording apparatus according to claim 1, wherein said recording bit rate changing device comprises:

   a decoding device for decoding the changed data portion; and

an encoding device for encoding the changed data portion decoded by the decoding device, at the second recording bit rate.

7. The information recording apparatus according to claim 1, wherein
the content data includes video data and audio data, and
said recording bit rate changing device preferentially reduces the recording bit rate of the audio data included in the changed data portion, rather than the recording bit rate of the video data included in the changed data portion.

8. The information recording apparatus according to claim 1, wherein
the content data recorded on the first recording medium includes a first content data portion encoded at the first bit rate and a second content data portion encoded at a third recording bit rate, which is higher than the first recording bit rate, and
said dividing device assigns a part or all of the second content data portion to the changed data portion.

9. An information recording apparatus having a function of reading content data, including video data, recorded on a first recording medium and of recording the content data onto a second recording medium, said information recording apparatus comprising:

a reading device for reading the content data in which first video resolution is set, from the first recording medium;
a dividing device for dividing the content data into an unchanged data portion and a changed data portion;
a video resolution changing device for changing video resolution of the changed data portion from the first video resolution to second video resolution which is lower than the first video resolution; and
a recording device for recording the unchanged data portion and the changed data portion in which the video resolution is changed by said video resolution changing device, onto the second recording medium.

10. The information recording apparatus according to claim 9, wherein said dividing device comprises a division position determining device for determining a division position of the unchanged data portion and the changed data portion when the content data is divided, such that a sum of a size of the unchanged data portion and a size of the changed data portion in which the video resolution is changed by said video resolution changing device is equal to or less than a capacity of an unrecorded area of the second recording medium.

11. The information recording apparatus according to claim 10, wherein the division position determining device determines the division position such that the sum of the size of the unchanged data portion and the size of the changed data portion in which the video resolution is changed by said video resolution changing device is maximal in a range of the capacity of the unrecorded area of the second recording medium.

12. The information recording apparatus according to claim 9, wherein said video resolution changing device comprises a video resolution determining device for determining the second video resolution, such that a sum of a size of the unchanged data portion and a size of the changed data portion in which the video resolution is changed by said video resolution changing device is equal to or less than a capacity of an unrecorded area of the second recording medium.

13. The information recording apparatus according to claim 12, wherein the video resolution determining device determines the second video resolution such that the sum of the size of the unchanged data portion and the size of the changed data portion in which the video resolution is changed by said video resolution changing device is maximal in a range of the capacity of the unrecorded area of the second recording medium.

14. The information recording apparatus according to claim 9, wherein said video resolution changing device comprises:

a decoding device for decoding the changed data portion; and
an encoding device for setting the second video resolution for the changed data portion decoded by said decoding device and further for encoding the decoded changed data portion.

15. An information recording method of reading content data recorded on a first recording medium and of recording the content data onto a second recording medium, said information recording method comprising:

a dividing process of dividing the content data, which is encoded at a first recording bit rate, into an unchanged data portion and a changed data portion;

a reading process of reading the changed data portion from the first recording medium;

a recording bit rate changing process of changing a recording bit rate of the changed data portion read in said reading process, from the first recording bit rate to a second recording bit rate which is lower than the first recording bit rate; and

a recording process of reading the unchanged data portion from the first recording medium, of recording the unchanged data portion onto the second recording medium, and of recording the changed data portion in which the recording bit rate is changed in said recording bit rate changing process, onto the second recording medium.

16. An information recording method of reading content data recorded on a first recording medium and of recording the content data onto a second recording medium, said information recording method comprising:

a dividing process of dividing the content data in which first video resolution is set, into an unchanged data portion and a changed data portion;

a reading process of reading the changed data portion from the first recording medium;

a video resolution changing process of changing video resolution of the changed data portion read in said reading process, from the first video resolution to second video resolution which is lower than the first video resolution; and

a recording process of reading the unchanged data portion from the first recording medium, of recording the unchanged data portion onto the second recording medium, and of recording the changed data portion in which the video resolution is changed in said video resolution changing process, onto the second recording medium.

17. A computer program for making a computer function as the information recording apparatus according to claim 1.

18. A computer program for making a computer function as the information recording apparatus according to claim 9.

[FIG. 1]

1

| 11 | Reading device |

First recording medium

2

| 12 | Dividing device |
| 16 | Division position determining device |

| 13 | Recording bit rate /video resolution changing device |
| 17 | Recording bit rate /video resolution determining device |
| 18 | Decoding device |
| 19 | Encoding device |

| 14 | Recording device |

Second recording medium

3

| 15 | Control device |

[FIG. 2]

```
                    ┌─────────────────────┐
                    │        Start        │
                    └─────────────────────┘
                               │
                               ▼                      S1
        ┌──────────────────────────────────────────┐
        │  Recognize the size of the content        │
        │  data and the capacity of the             │
        │  unrecorded area of the second            │
        │  recording medium                         │
        └──────────────────────────────────────────┘
                               │
                               ▼              S2
                    ◇───────────────────◇
                   ╱   The entire         ╲         YES
                  ◇   content data can be   ◇───────────────┐
                   ╲      recorded?        ╱                 │
                    ◇───────────────────◇                   │
                          NO │                               │
                             ▼              S3               ▼              S8
        ┌──────────────────────────────────┐   ┌──────────────────────────────┐
        │  Determine the video resolution   │   │  Record the entire content    │
        │  and the recording bit rate       │   │  data onto the second         │
        └──────────────────────────────────┘   │  recording medium without     │
                             │              S4   │  changing the recording bit   │
                             ▼                   │  rate or the like             │
        ┌──────────────────────────────────┐   └──────────────────────────────┘
        │  Determine the division position, │                  │
        │  and divide the content data      │                  │
        └──────────────────────────────────┘                  │
                             │              S5                  │
                             ▼                                  │
        ┌──────────────────────────────────┐                  │
        │  Read the unchanged data portion  │                  │
        │  from the first recording medium  │                  │
        │  and record it onto the second    │                  │
        │  recording medium                 │                  │
        └──────────────────────────────────┘                  │
                             │              S6                  │
                             ▼                                  │
        ┌──────────────────────────────────┐                  │
        │  Read the changed data portion    │                  │
        │  from the first recording medium, │                  │
        │  change the recording bit rate    │                  │
        │  or the like, and record the      │                  │
        │  changed data portion after the   │                  │
        │  change onto the second recording │                  │
        │  medium                           │                  │
        └──────────────────────────────────┘                  │
                             │              S7                  │
                             ▼                                  │
        ┌──────────────────────────────────┐                  │
        │  Record the management            │                  │
        │  information onto the second      │                  │
        │  recording medium                 │                  │
        └──────────────────────────────────┘                  │
                             │                                  │
                             ▼◄─────────────────────────────────┘
                    ┌─────────────────────┐
                    │        End          │
                    └─────────────────────┘
```

[FIG. 3]

[FIG. 4]

[FIG. 5]

EP 1 903 573 A1

[FIG. 6]

EP 1 903 573 A1

[FIG. 7]

[FIG. 8]

[FIG. 9]

EP 1 903 573 A1

[FIG. 10]

[FIG. 11]

## INTERNATIONAL SEARCH REPORT

<table>
<tr><td colspan="2">International application No.<br>PCT/JP2006/313777</td></tr>
</table>

A. CLASSIFICATION OF SUBJECT MATTER
*G11B27/034*(2006.01)i, *G11B20/10*(2006.01)i, *H04N5/765*(2006.01)i

According to International Patent Classification (IPC) or to both national classification and IPC

B. FIELDS SEARCHED

Minimum documentation searched (classification system followed by classification symbols)
G11B27/034, G11B20/10, H04N5/765

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| P,X<br>P,A | JP 2006-157553 A (Sanyo Electric Co., Ltd.),<br>15 June, 2006 (15.06.06),<br>Full text; Figs. 1 to 10<br>(Family: none) | 1-3,6,15,17<br>4-5,7-14,16,<br>18 |
| P,X<br>P,A | JP 2005-286560 A (NEC Personal Products Kabushiki Kaisha),<br>13 October, 2005 (13.10.05),<br>Full text; Figs. 1 to 13<br>(Family: none) | 1-6,8,15,17<br>7,9-14,16,18 |
| X<br>Y | JP 2005-050396 A (Pioneer Electronic Corp.),<br>24 February, 2005 (24.02.05),<br>Full text; Figs. 1 to 3<br>& US 2005/0024758 A1 | 1-6,8,15,17<br>7,9-14,16,18 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>25 September, 2006 (25.09.06) | Date of mailing of the international search report<br>03 October, 2006 (03.10.06) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2006/313777 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y<br>A | JP 2004-104288 A  (Sony Corp.),<br>02 April, 2004 (02.04.04),<br>Par. Nos. [0120] to [0145]; Figs. 7 to 9<br>& US 2005/0286361 A    & EP 1536642 A1<br>& WO 2004/023803 A1 | 7<br>1-6,8-18 |
| Y<br>A | JP 2002-218393 A  (Matsushita Electric<br>Industrial Co., Ltd.),<br>02 August, 2002 (02.08.02),<br>Par. Nos. [0004], [0118]; Figs. 1 to 4<br>& US 2002/0061181 A1 | 9-14,16,18<br>1-8,15,17 |

Form PCT/ISA/210 (continuation of second sheet) (April 2005)